(19) Europäisches Patentamt

European Patent Office

Office européen des brevets

(11) **EP 0 645 354 B1**

(12) **EUROPEAN PATENT SPECIFICATION**

(45) Date of publication and mention
of the grant of the patent:
**10.09.1997 Bulletin 1997/37**

(51) Int. Cl.$^6$: **C06B 45/12**, C06C 9/00

(21) Application number: **94305614.3**

(22) Date of filing: **28.07.1994**

(54) **Pyrotechnic Material**

Pyrotechnisches Material

Matière pyrotechnique

(84) Designated Contracting States:
**BE DE ES FR GB IT SE**

(30) Priority: **27.09.1993 GB 9319886**

(43) Date of publication of application:
**29.03.1995 Bulletin 1995/13**

(73) Proprietors:
• **IMPERIAL CHEMICAL INDUSTRIES PLC**
**London SW1P 3JF (GB)**
• **ICI CANADA INC**
**North York Ontario, M2N 6H2 (CA)**

(72) Inventors:
• **Chan, Sek Kwan**
**St Bruno PQ J3V 2NB (CA)**
• **Graham, Steven John**
**Fairlie KA29 0DY (GB)**
• **Kirby, Ian John**
**Ayr KA7 2UF (GB)**
• **Leiper, Graeme Allan**
**Prestwick KA9 1QX (GB)**

(74) Representative: **Ede, Eric et al**
**Fitzpatricks,**
**4 West Regent Street**
**Glasgow G2 1RS, Scotland (GB)**

(56) References cited:
EP-A- 0 584 922          FR-A- 2 489 419
US-A- 3 163 113          US-A- 4 581 998

## Description

This invention relates to pyrotechnic material in sheet form which is especially useful in inflators for gas bags of vehicle occupant restraint safety systems and in ignition systems, for example, in gas generators, rocket motors, shock wave transmission tubes and pyrotechnic signals.

Pyrotechnic sheet material consisting of one or more substrate layers of oxidizing polymeric film having a layer of oxidizable material, preferably metal, on at least a portion of at least one surface of the, or each, substrate layer, the polymeric film and the oxidizable material being conjointly capable of reacting together exothermically on ignition, has been described in PCT International Publications Nos. WO 90/10611 and WO 90/10724.

The use of pyrotechnic sheet material to ignite a propellant gas-generating charge has been described in our European patent publication no. 505024 and hybrid inflators containing gas heating elements comprising pyrotechnic sheet material to heat a supply of stored gas have been described in our United Kingdom patent specification no. GB 2264772A and European patent publication no. 559,335.

The rate of combustion of a propellant charge, particularly a sheet propellant can be substantially increased by providing a space or channel adjacent to the propellant charge through which hot gas and flame from the burning propellant can travel ahead of the burning face of the propellant and ignite the propellant at downstream positions. An especially effective method of providing such a flame conducting space in a sheet propellant charge is by disposing spacer elements between overlapping parallel propellant sheets which may for example be disposed in parallel planes or wrapped co-axially or spirally to form a cylindrical charge. The spacer elements may be formed as projecting portions of the propellant sheet as in the propellant charges described in US Patent Specification No. 4408534, and UK Patent Specification Nos. 457423 and 1,278,116. Likewise the rate and violence of a pyrotechnic sheet such as that described in PCT International Publications Nos. WO 90/10611 and WO 90/10724 may be enhanced by providing a space adjacent to the surface of the sheet to allow the passage of flame and hot combustion products to cause downstream (flashover) ignition.

In previously available pyrotechnic sheet material of the kind consisting of an oxidizing substrate layer and an overlying layer of oxidizable material reactable therewith, both of the layers have been continuous, covering the total layer interface except at the edge of the sheet. We have now discovered that the ease of ignition and rate combustion of such a pyrotechnic film having integral protrusions providing a flame conducting space adjacent to the surface of one layer of the sheet, preferably the oxidizable layer, may be significantly increased if the protrusions have discontinuous portions whereat portions of the interface between the oxidizing and oxidizable layers are exposed at breaks in one or both layers. The enhanced effect is considered to be due to the direct exposure of the reactant materials at the interface adjacent to the openings in the discontinuous material to the flame and hot combustion products flowing in the space over the layer, the interfacial region having the optimum distribution and concentration of reactants for ease of ignition. The improved pyrotechnic sheet is especially advantageous for use in ignition elements for propellant compositions and in vehicle occupant restraint safety systems, where it may be used advantageously in ignition elements for gas-generating compositions and in "hybrid" inflators to heat a stored supply of gas for gas-bag inflation.

Accordingly the present invention provides a pyrotechnic sheet material comprising a substrate layer of an oxidizing material having a layer of oxidizable material on at least a portion of at least one surface thereof, the ratio of oxidizing material and the oxidizable material at the said portion being such that the oxidizing and oxidizable material are conjointly capable of reacting together exothermically on ignition, said portion of sheet material having integral protrusions (projecting portions) formed thereon, the protrusions serving as spacer elements disposed to define a flow path across the surface of the sheet to facilitate the transfer of flame and combustion products across the said surface, thereby effecting rapid combustion of the pyrotechnic material, at least one of said layers of oxidizing and oxidizable materials being discontinuous over at least a portion of the surface of the protrusions so as to expose portions of the interface between the oxidizing material and the said discontinuous portion.

Although either or both of the said layers of material of the pyrotechnic sheet may contain at least one discontinuous portion, it is generally preferred, for ease of manufacture, that the oxidizable material contains at least one discontinuous portion.

The said discontinuous portion of the material need only contain very small openings provided the openings are flame permeable. Thus in a preferred pyrotechnic sheet the openings are provided by small pores in the material or even by micropores which are invisible to the naked eye.

The integral protrusions are advantageously dimples, ribs or corrugations formed in any desired direction on one or both surfaces of the pyrotechnic sheet. Preferred protrusions are dimples which may be embossed on the sheet. The dimples may have any convenient base profile, for example circular or rectangular, and have any convenient medial cross sectional configuration, for example, rectangular or triangular. Protrusions in the form of hollow domes, pyramids or rectangular boxes are generally convenient. The protrusions are preferably formed by permanent deformation of an already formed sheet comprising oxidizing material overlaid with oxidizable material. They need not be disposed in a regular pattern on the pyrotechnic sheet provided the disposition allows free passage of hot gas and flame between adjacent layers of pyrotechnic sheet, but a regular disposition of protrusions generally facilitates large scale manufacture of the pyrotechnic sheet. The height of the protrusions may vary widely as desired, for example from 0.1 to 100 times the thickness of the pyrotechnic sheet.

Preferably at least a portion of the surface of the protrusions having discontinuous layer portions containing flame-permeable apertures extends in a direction having a component normal to the base plane of the pyrotechnic sheet material. Flame travelling in a space adjacent to the pyrotechnic sheet material will collide with such a protrusion portion at a high angle of incidence and will therefore effect ignition of materials at the exposed interface readily and efficiently.

Advantageously in order to facilitate manufacture of the pyrotechnic sheet, one of the said layers of oxidizing or oxidizable material comprises permanently deformable material requiring a higher strain for rupture than the material of the other layer. The pyrotechnic sheet can then be manufactured from a sheet comprising continuous layers of oxidizing and oxidizable material by stretching at least a portion of the sheet sufficiently to cause permanent deformation of the layer of material having the higher strain for rupture and rupture of the layer of material having the lower strain for rupture to obtain the required flame-permeable apertures in the material having the lower strain for rupture.

A specially preferred pyrotechnic sheet material comprises pyrotechnic film having a substrate of a deformable oxidizing polymeric film which may optionally be a porous polymeric film, and a layer of oxidizable material on at least a portion of at least one surface, the polymeric film and the oxidizable material being conjointly capable of reacting together exothermically on ignition. The polymeric film may if desired, be coated on both sides with oxidizable material.

Preferred oxidizing polymeric film contains atoms chemically bound therein selected from the group consisting of halogens (especially fluorine), oxygen, sulphur, nitrogen and phosphorous. One preferred film layer comprises fluoropolymer such as polytetrafluoroethylene (PTFE) which produces a high energy pyrotechnic sheet, but other suitable polymeric films include those comprising polychlorotrifluoroethylene, polyhexafluoropropylene, copolymers of trifluoroethylene and hexafluoropropylene, copolymers of trifluoroethylene and tetrafluoroethylene, copolymers of hexafluoropropylene and tetrafluoroethylene, copolymers of hexafluoropropylene and vinylidene fluoride, copolymers of tetrafluoroethylene and partially fluorinated propylene, copolymers of chlorotrifluoroethylene and vinylidene fluoride, homopolymers of partially fluorinated propylene, copolymers of partially fluorinated propylene and vinylidene fluoride, trichloroethylene homopolymers, copolymers of trichloroethylene and vinylidene fluoride, mixtures of two or more of such polymers or mixtures of any one or more of such polymers with PTFE. For some applications for example, for igniting particulate propellant or for heating stored gas in hybrid inflators for 'airbags', hydrogen-free polymer film is preferred in order to give gasless combustion products and thereby reduce blast effects.

The oxidizable material is advantageously vapourdeposited on the film layer and may advantageously comprise a layer of metal selected from the group consisting of lithium, sodium, magnesium, beryllium, calcium, strontium, barium, aluminium, titanium, zirconium, and alloys thereof, the metal layer having at least one portion which is discontinuous. A metal layer is especially advantageous as it significantly enhances the dimensional stability of the pyrotechnic sheet and is easily ruptured. A most preferred metal for high heat generation is magnesium or an alloy thereof preferably coated on to a fluoropolymer substrate. Preferably the ratio of metal to the substrate of oxidizing polymeric film is substantially stoichiometric or there is a small excess of metal at the location of the film underlying the metal. The reaction between PTFE and magnesium can be represented as

$$(C_2F_4)n + 2nMg \rightarrow 2nMgF_2(g) + 2nC(s) + 5.98 \text{ MJ/Kg}.$$

This reaction releases 5.98 megajoules/kilogram of reactant pyrotechic material.

The rate of energy release on ignition varies inversely with the thickness and directly with the porosity of the pyrotechnic sheet material and, accordingly, the thickness and porosity will be chosen to attain the desired energy release. Thus the preferred polymeric film will generally have an areal mass of 10 to 150g/m$^2$, typically 25-75g/m$^2$ and the total amount of the oxidizable material will be equivalent to a laminar thickness of 2 to 30 $\mu$m, typically 4 to 15 $\mu$m.

A typical pyrotechnic film comprises a film of halogenopolymer 3 to 50 $\mu$m, (preferably 10 - 30 $\mu$m) thick, having vapour-deposited on each side a layer of magnesium 2 to 40 $\mu$m (preferably 4 - 15 $\mu$m) thick.

From another aspect the invention consists in a method of manufacturing pyrotechnic sheet material wherein integral protrusions are formed on at least a surface portion of sheet material comprising a substrate layer of oxidizing material overlaid with at least one layer of oxidizable material, the ratio of the oxidizing material and the oxidizable material being such that the oxidizing and oxidizable material at the said surface portion are conjointly capable of reacting together exothermically on ignition and, flame-permeable apertures are formed in at least one of the layers of oxidizing and oxidizable material over at least a portion of the surface of the protrusions through which apertures portions of the layer interface are exposed so that the exposed interface portions may be ignited by flame travelling along the surface portion of the sheet material containing the apertures.

In the manufacture of a pyrotechnic sheet wherein one of the said layers of oxidizing or oxidizable material comprises a deformable material requiring a higher strain for rupture than the material of the other layer, the flame-permeable apertures are advantageously provided in the layer having the lower strain for rupture by stretching the pyrotechnic sheet at the protrusions to permanently deform the layer of material having the higher strain for rupture and to rupture the layer of material having the lower strain for rupture. The protrusions may be provided by stretching portions of the sheet in a direction having a component perpendicular to the base-plane of the sheet to provide protrusions on the sheet and simultaneously to rupture at least one of the layers of oxidizing or oxidizable material to provide flame-permeable apertures through which portions of the interface of the oxidizing and oxidizable material are exposed. The protrusions serve as the aforedescribed spacer elements to maintain a space between adjacent layers of pyrotechnic material when two or more pyrotechnic sheets are overlaid or when one or more sheets are co-axially or spirally wrapped. Flame travelling in the space will collide with surface portions of the protrusions extending in a direction having a component perpendicular to the base-plane of the sheet at an increased angle of incidence to ignite the materials at the exposed interface in such surface portions more readily and efficiently.

Protrusions having interface-exposing flame-permeable apertures are conveniently provided by forming them in a pyrotechnic sheet by means of one or more appropriately shaped punching or stamping elements, the pyrotechnic sheet at the punched area being strained sufficiently to permanently deform the layer of material having the higher strain for rupture and form flame-permeable apertures in the layer of material having the lower strain for rupture. If desired, in forming the protrusions, holes may be punched through the pyrotechnic sheet although, in general, this is not necessary. A preferred method of forming the protrusions is by embossing the pyrotechnic sheet by means of suitably patterned embossing elements for example by passing the sheet between a patterned roller and a complementary embossing element such as a second patterned roller or a pad or roller of elastomeric material such as rubber.

In use in a pyrotechnic charge the pyrotechnic sheet of the invention is advantageously disposed in overlying layers, with spacer elements being disposed between the layers to maintain a space to permit flame and combustion products to travel between the layers.

The pyrotechnic sheet material of the invention may be used in any convenient shape or configuration, for example, in flat sheets, strips, tapes or discs or it may be folded, wrapped, wrinkled, pleated, corrugated, fluted or wrapped around a former such as a rod or tube. If desired, the pyrotechnic sheet material may be supported on a former sheet of material such as polymeric film, paper or glass cloth.

Advantageously, for use in ignition elements and heating charges, the pyrotechnic sheet may be wrapped around a central rigid former, for example, a solid rod or a tube having a solid, perforated or meshed wall. The sheet may optionally be wrapped around a charge of pyrotechnic material such as a sodium azide composition or the former may contain such a charge. The sheet may be wrapped as a single or multiple wrap applied, for example, as a spirally or helically wrapped film. The wrapped sheet may advantageously be slit through at one or more positions to provide venting passages and, optionally, it may be placed inside a rigid perforated tubular housing. The use of a former or housing prevents collapse of the pyrotechnic sheet under the initial ignition impulse from an ignition means such as a squib, thereby ensuring that the pyrotechnic material is presented to the igniter in a suitable manner for obtaining efficient ignition.

The invention is further illustrated by the embodiments which are hereinafter described, by way of example only, with reference to the accompanying drawings wherein:-

Fig 1 shows diagrammatically a fragmentary plan view of a first embodiment of the invention;
Fig 2 is a diagrammatic cross-section on a portion of the line 2-2 of Fig 1;
Fig 3 is a diagrammatic cross-section of overlapping portions of the fragments as shown in Fig 1 on the line 2-2 of Fig 1;
Fig 4 shows diagrammatically the fragment 4 of Fig 1 on a larger scale;
Fig 5 is a diagrammatic cross-section on the line 5-5 of Fig 4;
Fig 6 shows diagrammatically a fragmentary plan view of a second embodiment of the invention;
Fig 7 is a diagrammatic cross-section on a portion of the line 7-7 of Fig 6;
Fig 8 is a diagrammatic cross-section of overlapping portions of fragments as shown in Fig 6 on the line 8-8 of Fig 6;
Fig 9 shows diagrammatically the fragment 9 of Fig 6 on a larger scale;
Fig 10 is a diagrammatic cross-section on the line 10-10 of Fig 9;
Fig 11A is a photomicrograph of a portion of pyrotechnic sheet material as shown in Fig 1;
Fig 11B is a photomicrograph of the outlined fragment of Fig 11A at higher magnification;
Fig 12A is a photomicrograph of a portion of pyrotechnic sheet material as shown in Fig 6;
Fig 12B is a photomicrograph of the outlined fragment of Fig 12a at higher magnification;
Fig 13A is a photomicrograph of a further portion of a pyrotechnic sheet material as shown in Fig 6;
Fig 13B is a photomicrograph of the outlined fragment of Fig 13A at higher magnification.

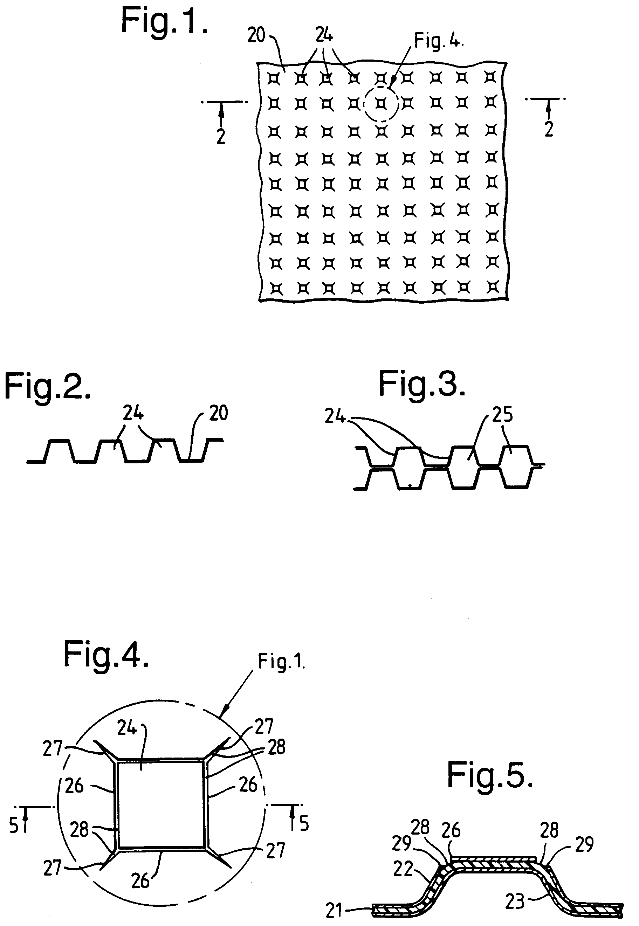

The pyrotechnic material illustrated in Figs 1 and 2 consists of a basically flat sheet (20) comprising a layer of oxidizing polymeric film (21) coated on each side with a layer of oxidizable material, a layer (22) on the upper surface and a layer (23) on the bottom surface as shown in detail in Fig 5. The sheet (20) has regularly spaced rows of hollow square-based dimples (24) of rectangular cross-section formed therein, the top of each dimple being slightly narrower than the base as shown in Fig 2. The dimple configuration ensures that when one portion of a sheet (20) is overlaid on another identical portion of sheet as shown in Fig 3, as for example when two sheets are overlaid in contact or when a single sheet is spirally wound with the turns of the sheet in contact, empty space (25) is maintained between adjacent surfaces of the sheet. When the pyrotechnic sheet is ignited, flame and combustion products can travel through this space ahead of the burning front to ignite the sheet at downstream positions, thereby effecting very rapid, substantially simultaneous, ignition of a large area of the sheet.

As shown in Figs 4 and 5 the upper layer of oxidizable material has narrow cracks along the upper periphery (26) and side outer corners (27) of the dimples (24), the cracks providing flame-permeable apertures (28) through which portions (29) of the interface between the oxidizing polymeric film (21) and the layer (22) of the oxidizable material is exposed. The apertures (28) in the side corners (27) are disposed in surfaces lying in a direction having a component normal to the base plane of the sheet (20) so that flame travelling along the upper surface of the sheet (20) towards these apertures will collide with the exposed interface portions at high incident angles and will therefore be especially efficient in igniting the pyrotechnic material at the exposed interface positions.

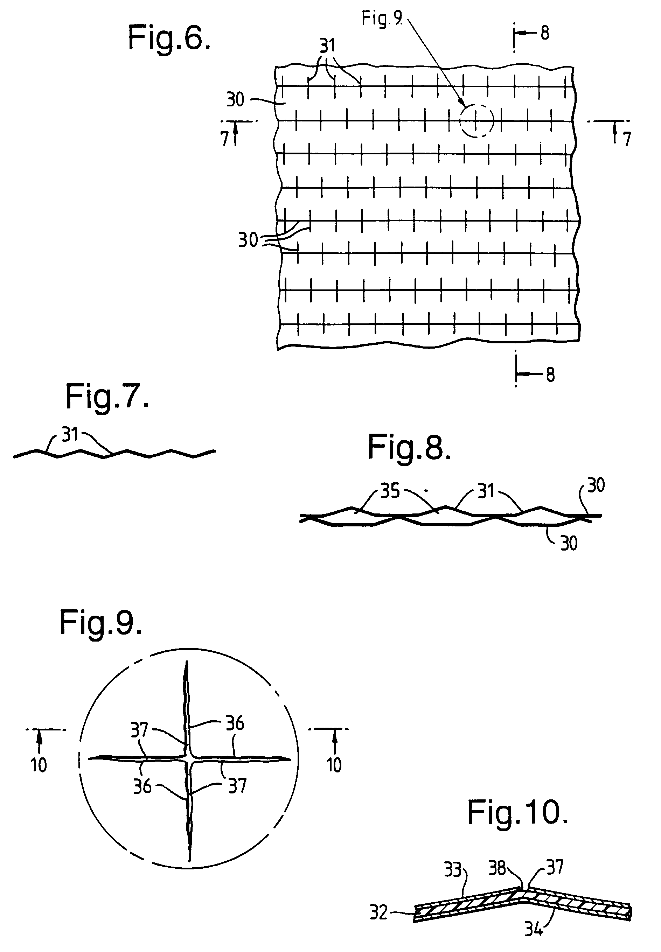

The second embodiment, shown in Figs 6 and 7, comprises a pyrotechnic sheet embossed with hollow regularly disposed dimples (31) shaped as hollow square-based pyramids. The sheet (30) like the first embodiment (Fig 1) comprises a layer of oxidizing polymeric film (32) coated on its upper side with a layer of oxidizable material (33) and on its lower surface with a further layer (34) of oxidizable material. This configuration ensures that two overlying portions of the sheet (30) as shown in Fig 8 will be spaced apart to provide space (35) between the sheet portions to allow the passage of flame and combustion products as described above for the pyrotechnic sheet of Fig 1.

As shown in Figs 9 and 10 the upper layer (33) of oxidizable material at the sloping corners (36) and the apex of the pyramidal dimples (31) contains narrow cracks providing flame-permeable apertures (37) through which portions of the interface (38) between the oxidizing polymeric film layer (32) and the layer (33) of oxidizable material is exposed. The apertures (37) in the sloping corners (36) of the dimples (31) are located in surfaces lying in a direction having a component normal to the base plane of the polymeric sheet (30) and therefore flame and combustion products travelling along the upper surface of the sheet (30) towards the apertures (37) will collide with the exposed interface portions at high incident angles and will consequently be more effective in igniting the pyrotechnic material at the exposed interface positions.

In the manufacture of the pyrotechnic sheet (20, 30) illustrated in Figs 1 and 6, a flat pyrotechnic sheet comprising a layer of deformable oxidizing polymeric film already coated on each side with a layer of oxidizable material is permanently dimpled by passing the sheet between an appropriately patterned embossing metal roller and an opposing rubber-faced roller, whereby the polymeric film is permanently deformed and the upper layer of oxidizable material is stretched beyond its breaking point, at least at the corners of the protrusions formed on the pyrotechnic sheet.

The manufacture of the pyrotechnic sheet material of the invention is further described in the following specific Examples.

Example 1

A 25 $\mu$m thick sheet of PTFE was coated on each side with an 8.5 $\mu$m thick vapour-deposited layer of magnesium (approximately stoichiometric proportions). The coated sheet was embossed with regular rows of dimples as shown in Fig 1, each dimple being approximately 0.75mm square at the base, 0.5mm square at the top, and 0.25mm high by passing the sheet between a patterned metal roll and a plain rubber roll. The centre to centre spacing of the dimples was 3mm in each direction.

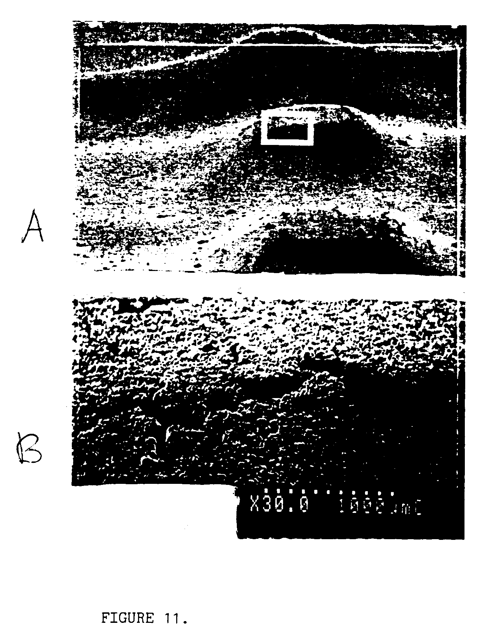

Photomicrographs of portions of the embossed pyrotechnic sheet shown in Fig 11A and 11B show that the upper layer of oxidizable material (magnesium) was ruptured around the periphery of the top of the dimples to expose the oxidizing polymeric film, the width of the opening being up to 10 $\mu$m.

The sheet was rolled into a 20.5cm long helically wound charge assembly consisting of 15 turns of the sheet wound around a central tubular phenolic resin former having a diameter of 6mm and 6mm wall thickness. Three longitudinal slits extending to within 10mm from each end of the charge were cut through the spiral section of the pyrotechnic sheet. The assembled charge was placed in a combustion test vessel (ballistic bomb) and ignited with a squib.

At 65 milliseconds after ignition the pressure of the vessel was 17.5MPa as compared to 11MPa obtained with a similar charge of the original unpatterned sheet, indicating a substantial increase in the combustion rate of the pyrotechnic sheet.

Example 2

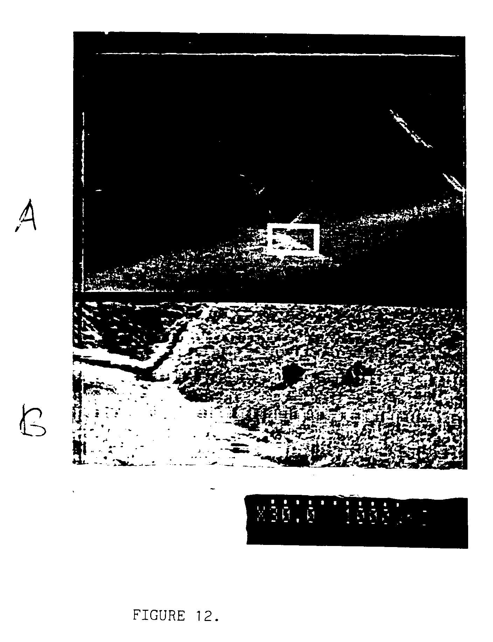

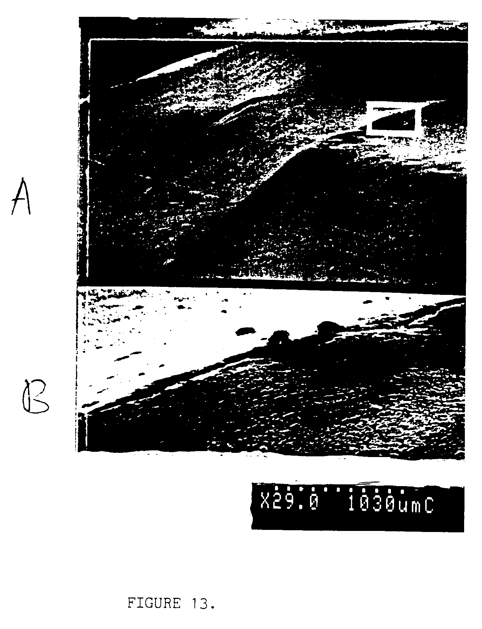

A flat pyrotechnic sheet the same as the magnesium coated sheet used in Example 1 was embossed with hollow pyramidal dimples 0.25mm high having a 3mm square base disposed at 4mm centres longitudinally and 3mm centres transversely by rolling the sheet with a metal roll patterned with pyramidal projections against a rubber backing pad. In the embossing process the pyrotechnic sheet was stretched, the polymeric film (32) became permanently deformed and open cracks developed in the upper magnesium layer (33) along the outer corners (36) and the apex of the pyramidal dimples. Photomicrographs Figs 12A and 12B shows the apertures in the cracks adjacent to the apex of a pyramidal dimple and Fig 13A and 13B shows the apertures in a crack at an intermediate position on a sloping corner. In each case the apertures were up to 6 $\mu$m wide.

When the helically wound charge of the pyrotechnic sheet was tested in a combustion test vessel as described in Example 1 the pressure in the test vessel after 65 milliseconds was 17.5MPa.

**Claims**

1. A pyrotechnic sheet material (20,30) comprising a substrate layer of an oxidizing material (21,32) having a layer of oxidizable material (22,23,33,34) on at least a portion of at least one surface thereof, the ratio of the oxidizing material and the oxidizable material at said portion being such that the oxidizing and oxidizable material are conjointly capable of reacting together exothermically on ignition, said portion of sheet material having integral protrusions (24,31) formed thereon, said protrusions serving as spacer elements disposed to define a flow path across the surface of the sheet to facilitate the transfer of flame and combustion products across the said surface, characterised in that over at least a portion of the surface of said protrusions at least one of said layers of oxidizing and oxidizable material is discontinuous so as to expose portions of the interface (29,38) between the oxidizing material and the oxidizable material through flame-permeable apertures (28,37) in said discontinuous portion.

2. Pyrotechnic sheet material as claimed in claim 1 characterised in that the said discontinuous layer portion contains small cracks or pores (28,37).

3. Pyrotechnic sheet material as claimed in claim 1 or claim 2 characterised in that said protrusions (24,31) are formed by permanent deformation of the pyrotechnic sheet.

4. Pyrotechnic sheet material as claimed in any one of claims 1 to 3 characterised in that at least a portion of the surface of the protrusions (24,31) having discontinuous layer portions containing said flame-permable apertures (28,37) extends in a direction having a component normal to the base-plane of the pyrotechnic sheet material (20,30).

5. Pyrotechnic sheet material as claimed in any one of claims 1 to 4 characterised in that one of the said layers of oxidizing material (21,32) or oxidizable material (22,23,33,34) comprises permanently deformable material requiring a higher strain for rupture than the material of the other layer.

6. Pyrotechnic sheet material as claimed in any one of claims 1 to 5 comprising a substrate of an oxidizing polymeric film (21,32), for example a film containing chemically bound atoms selected from the group consisting of halogens, oxygen, sulphur, nitrogen and phosphorous and preferably comprising polytetrafluoroethylene (PTFE), polychlorotrifluoroethylene, polyhexafluoropropylene, copolymers of trifluoroethylene and hexafluoropropylene, copolymers of trifluoroethylene and tetrafluoroethylene, copolymers of hexafluoropropylene and tetrafluoroethylene, copolymers of hexafluoropropylene and vinylidene fluoride, copolymers of tertrafluoroethylene and partially fluorinated propylene, copolymers of chlorotrifluoroethylene and vinylidene fluoride, homopolymers of partially fluorinated propylene, copolymers of partially fluorinated proplene and vinylidene fluoride, trichioroethylene homopolymers, copolymers of trichioroethylene and vinylidene fluoride, mixtures of two or more of such polymers or mixtures of any one or more of such polymers with PTFE; and, on at least a portion of at least one surface of said substrate, a layer of oxidizable material (22,23,33,34) for example a layer of metal selected from the group consisting of lithium, sodium, magnesium, beryllium, calcium, strontium, barium, aluminium, titanium, zirconium, and alloys thereof, the oxidizable layer having at least one portion which is discontinuous and the polymeric film and the oxidizable material being conjointly capable of reacting together exothermically on ignition.

7. Pyrotechnic sheet material as claimed in claim 6 comprising magnesium or an alloy thereof coated on a fluoropolymer substrate.

8. Pyrotechnic sheet material as claimed in claim 6 or claim 7 comprising a film of halogenopolymer 3 to 50 $\mu$m thick having vapour-deposited on each side a layer of magnesium 2 to 40 $\mu$m thick. 9. A method of manufacturing pyrotechnic sheet material

9. ,30) wherein integral protrusions (24,31) are formed on at least a surface portion of sheet material comprising a substrate layer of oxidizing material (21,32) overlaid with at least one layer of oxidizable material (22,23,33,34) the ratio of the oxidizing material and the oxidizable material being such that the oxidizing and oxidizable material at said surface portion are conjointly capable of reacting together exothermically on ignition, characterised in that flame-permeable apertures (28,37) are formed in at least one of said layers of oxidizing and oxidizable material over at least a portion of the surface of said protrustions through which apertures portions of the layer interface (29,38) are exposed so that the said interface portions may be ignited by flame travelling along the surface portion of the sheet material containing the said apertures.

10. A method as claimed in claim 9 characterised in that one of the said layers of oxidizing or oxidizable material comprises a deformable material requiring a higher strain for rupture than the material of the other layer, and the flame-permeable apertures are provided by stretching the pyrotechnic sheet at the said protrusions to permanently deform the layer of material (21,32) having the higher strain for rupture and to rupture the layer of material (22,23,33,34) having the lower strain for rupture.

11. A method as claimed in claim 10 characterised in that portions of the pyrotechnic sheet are stretched in a direction having a component perpendicular to the base-plane of the pyrotechnic sheet material to provide protrusions (24,31) on the sheet and simultaneously to rupture at least one of the layers of oxidizing or oxidizable material (22,23, 33,34) to provide flame-permeable apertures (28,37) through which portions of the interface (29,38) of the oxidizing and oxidizable materials are exposed.

12. A method as claimed in claim 11 wherein flame-permeable apertures (28,37) are provided on protrusion surface portions extending in a direction having a component normal to the base-plane of the pyrotechnic sheet material (20,30).

13. A method as claimed in claim 11 or claim 12 wherein the protrusions (24,31) are formed by means of one or more punching or stamping elements, for example, patterned embossing elements or patterned rollers.

14. A pyrotechnic charge comprising pyrotechnic sheet material as claimed in any one of claims 1 to 8 disposed in overlying layers, so that the protrusions (24,31) maintain space between said layers to permit flame and combustion products to travel between the layers.

**Patentansprüche**

1. Pyrotechnisches Blattmaterial (20, 30), umfassend eine Substratschicht aus einem oxidierendem Material (21, 32) mit einer Schicht aus einem oxidierbarem Material (22, 23, 33, 34) auf mindestens einem Abschnitt von mindestens einer ihrer Oberflächen, wobei das Verhältnis des oxidierenden Materials zum oxidierbaren Material an dem Abschnitt derart ist, daß das oxidierende und das oxidierbare Material vereinigt in der Lage sind, bei Zündung exotherm zusammen zu reagieren, wobei auf dem Abschnitt des Blattmaterials integrierte Vorsprünge (24, 31) gebildet sind, wobei die als Platzhalterbestandteile fungierenden Vorsprünge zur Festlegung eines Strömungspfads über die Oberfläche des Blatts angeordnet sind, um den Übergang von Flammen und Verbrennungsprodukten über die Oberfläche zu erleichtern,
**dadurch gekennzeichnet, daß**
über mindestens einem Abschnitt der Oberfläche der Vorsprünge mindestens eine der Schichten aus oxidierendem und oxidierbarem Material diskontinuierlich ist, so daß Abschnitte der Grenzfläche (29, 38) zwischen dem oxidierenden Material und dem oxidierbaren Material durch flammendurchlässige Öffnungen (28, 37) in dem diskontinuierlichen Abschnitt freigelegt sind.

2. Pyrotechnisches Blattmaterial nach Anspruch 1,
**dadurch gekennzeichnet, daß**
der diskontinuierliche Schichtabschnitt kleine Risse oder Poren (28, 37) enthält.

3. Pyrotechnisches Blattmaterial nach einem der Ansprüche 1 oder 2,
**dadurch gekennzeichnet, daß**
die Vorsprünge (24, 31) durch dauerhafte Verformung des pyrotechnischen Blatts gebildet sind.

4. Pyrotechnisches Blattmaterial nach einem der Ansprüche 1 bis 3,
**dadurch gekennzeichnet, daß**
mindestens ein Abschnitt der Oberfläche der Vorsprünge (24, 31) mit diskontinuierlichen Schichtabschnitten, welche die flammendurchlässigen Öffnungen (28, 37) enthalten, sich in eine Richtung mit einer Komponente normal zur Basisebene des pyrotechnischen Blattmaterials (20, 30) ausdehnt.

5. Pyrotechnisches Blattmaterial nach einem der Ansprüche 1 bis 4,
**dadurch gekennzeichnet, daß**
eine der Schichten aus oxidierendem Material (21, 32) oder oxidierbarem Material (22, 23, 33, 34) ein dauerhaft verformbares Material umfaßt, für welches zum Brechen ein größere Spannung als für das Material der anderen Schicht erforderlich ist.

6. Pyrotechnisches Blattmaterial nach einem der Ansprüche 1 bis 5, umfassend ein Substrat aus einem oxidierender Polymerfilm (21, 32), beispielsweise einem Film, der chemisch gebundene Atome enthält, ausgewählt aus der Gruppe, die aus Halogenen, Sauerstoff, Schwefel, Stickstoff und Phosphor besteht, und vorzugsweise Polytetrafluorethylen (PTFE), Polychlortrifluorethylen, Polyhexafluorpropylen, Copolymere von Trifluorethylen und Hexafluorpropylen, Copolymere von Trifluorethylen und Tetrafluorethylen, Copolymere von Hexafluorpropylen und Tetrafluorethylen, Copolymere von Hexafluorpropylen und Vinylidenfluorid, Copolymere von Tetrafluorethylen und teilweise fluoriniertem Propylen, Copolymere von Chlortrifluorethylen und Vinylidenfluorid, Homopolymere von teilweise fluoriniertem Propylen, Copolymere von teilweise fluoriniertem Propylen und Vinylidenfluorid, Trichlorethylen-Homopolymere, Copolymere von Trichlorethylen und Vinylidenfluorid, Gemische von zwei oder mehreren derartigen Polymeren oder Gemische von einem oder mehreren derartigen Polymeren mit PTFE umfassend; und, auf mindestens einem Abschnitt von mindestens einer Oberfläche des Substrats, eine Schicht aus oxidierbarem Material (22, 23, 33, 34), beispielsweise eine Schicht aus einem Metall, ausgewählt aus der Gruppe, die aus Lithium, Natrium, Magnesium, Beryllium, Calcium, Strontium, Barium, Aluminium, Titan, Zirkonium und Legierungen davon besteht, wobei die oxidierbare Schicht mindestens einen diskontinuierlichen Abschnitt besitzt und der Polymerfilm und das oxidierbare Material vereinigt in der Lage sind, bei Zündung exotherm zusammen zu reagieren.

7. Pyrotechnisches Blattmaterial nach Anspruch 6, umfassend auf ein Fluorpolymersubstrat aufgetragenes Magnesium oder eine Legierung davon.

8. Pyrotechnisches Blattmaterial nach einem der Ansprüche 6 oder 7, umfassend einen 3 bis 50 μm dicken Film aus Halogenpolymer mit einer auf jeder Seite dampfabgeschiedenen 2 bis 40 μm dicken Schicht aus Magnesium.

9. Verfahren zur Herstellung eines pyrotechnischen Blattmaterials (20, 30), wobei integrierte Vorsprünge (24, 31) auf mindestens einem Oberflächenabschnitt des Blattmaterials gebildet sind, welches eine mit mindestens einer Schicht aus oxidierbarem Material [22, 23, 33, 34) überlagerte Substratschicht aus oxidierendem Material (21, 32) umfaßt, wobei das Verhältnis des oxidierenden Materials zum oxidierbaren Material derart ist, daß das oxidierende und das oxidierbare Material an dem Oberflächenabschnitt vereinigt in der Lage sind, bei Zündung exotherm zusammen zu reagieren,
**dadurch gekennzeichnet, daß**
flammendurchlässige Öffnungen (28, 37) in mindestens einer der Schichten aus oxidierendem und oxidierbarem Material über mindestens einem Oberflächenabschnitt der Vorsprünge gebildet sind, wobei durch die Öffnungen Abschnitte der Schichtgrenzfläche (29, 38) freigelegt sind, so daß die freigelegten Grenzflächenabschnitte durch ein Wandern der Flammen entlang dem Oberflächenabschnitt des die Öffnungen enthaltenden Blattmaterials gezündet werden können.

10. Verfahren nach Anspruch 9,
**dadurch gekennzeichnet, daß**

eine der Schichten aus oxidierendem oder oxidierbarem Material ein verformbares Material umfaßt, für welches zum Brechen ein größere Spannung als für das Material der anderen Schicht erforderlich ist, und die flammendurchlässigen Öffnungen durch Strecken des pyrotechnischen Blatts an den Vorsprüngen unter dauerhafter Verformung der Materialschicht (21, 32) mit der größeren Bruchspannung und Bruch der Materialschicht (22, 23, 33, 34) mit der geringeren Bruchspannung bereitgestellt werden.

11. Verfahren nach Anspruch 10,
**dadurch gekennzeichnet, daß**
Abschnitte des pyrotechnischen Blatts in eine Richtung mit einer Komponente senkrecht zur Basisebene des pyrotechnischen Blattmaterials gestreckt werden, um Vorsprünge (24, 31) auf dem Blatt bereitzustellen und gleichzeitig mindestens eine der Schichten aus oxidierendem oder oxidierbarem Material (22, 23, 33, 34) zu brechen, um flammendurchlässige Öffnungen (28, 37) bereitzustellen, durch die Abschnitte der Grenzfläche (29, 38) der oxidierenden und oxidierbaren Materialien freigelegt werden.

12. Verfahren nach Anspruch 11, wobei flammendurchlässige Öffnungen (28, 37) auf Oberflächenabschnitten von Vorsprüngen bereitgestellt werden, die sich in eine Richtung mit einer Komponente normal zur Basisebene des pyrotechnischen Blattmaterials (20, 30) ausdehnen.

13. Verfahren nach einem der Ansprüche 11 oder 12, wobei die Vorsprünge (24, 31) mittels einem oder mehreren Stanz- oder Prägeelementen, beispielsweise gemusterten Prägeelementen oder gemusterten Walzen, gebildet werden.

14. Pyrotechnische Ladung, umfassend ein pyrotechnisches Blattmaterial gemäß einem der Ansprüche 1 bis 8, welches in übereinander liegenden Schichten angeordnet ist, so daß die Vorsprünge (24, 31) einen Raum zwischen den Schichten aufrechterhalten, um die Fortbewegung von Flammen und Verbrennungsprodukten zwischen den Schichten zu gestatten.

**Revendications**

1. Matière pyrotechnique en feuille (20, 30) comprenant une couche servant de substrat constituée d'une matière oxydante (21, 32) comportant une couche de matière oxydable (22, 23, 33, 34) sur au moins une partie d'au moins une de ses surfaces, le rapport de la matière oxydante et de la matière oxydable à ladite partie étant tel que la matière oxydante et la matière oxydable soient conjointement capables de réagir ensemble de manière exothermique lors de l'inflammation, ladite partie de matière en feuille comportant des protubérances intégrales (24, 31) formées sur cette matière, lesdites protubérances servant d'éléments intercalaires disposés de manière à définir un trajet d'écoulement à travers la surface de la feuille pour faciliter le transfert de la flamme et des produits de combustion à travers ladite surface, caractérisée en ce que, au-dessus d'au moins une partie de la surface desdites protubérances, au moins une desdites couches de matière oxydante et de matière oxydable est discontinue de manière à exposer des portions de l'interface (29, 38) entre la matière oxydante et la matière oxydable à travers des orifices perméables à la flamme (28, 37) dans ladite portion discontinue.

2. Matière pyrotechnique en feuille suivant la revendication 1, caractérisée en ce que la portion de couche discontinue contient des petites fissures ou des petits pores (28, 37).

3. Matière pyrotechnique en feuille suivant la revendication 1 ou la revendication 2, caractérisée en ce que les protubérances (24, 31) sont formées par déformation permanente de la feuille pyrotechnique.

4. Matière pyrotechnique en feuille suivant l'une quelconque des revendications 1 à 3, caractérisée en ce qu'au moins une portion de la surface des protubérances (24, 31) comportant des portions de couche discontinues contenant les orifices perméables à la flamme (28, 37) s'étend dans une direction ayant une composante perpendiculaire au plan de base de la matière pyrotechnique en feuille (20, 30).

5. Matière pyrotechnique en feuille suivant l'une quelconque des revendications 1 à 4, caractérisée en ce qu'une des couches de matière oxydante (21, 32) ou de matière oxydable (22, 23, 33, 34) comprend une matière déformable de matière permanente nécessitant une plus forte déformation pour la rupture que la matière de l'autre couche.

6. Matière pyrotechnique en feuille suivant l'une quelconque des revendications 1 à 5, comprenant un substrat constitué d'un film polymérique oxydant (21, 32), par exemple un film contenant des atomes liés chimiquement choisis dans le groupe consistant en des halogènes, l'oxygène, le soufre, l'azote et le phosphore et comprenant de préférence un polytétrafluoréthylène (PTFE), un polychlorotrifluoréthylène, un polyhexafluoropropylène, des copolymères de trifluoréthylène et d'hexafluoropropylène, des copolymères de trifluoréthylène et tétrafluoréthylène, des copolymères d'hexafluoropropylène et tétrafluoréthylène, des copolymères d'hexafluoropropylène et de fluorure de vinylidène, des copolymères de tétrafluoréthylène et de propylène partiellement fluoré, des copolymères de chlorotrifluoréthylène et de fluorure de vinylidène, des homopolymères de propylène partiellement fluoré, des copolymères de propylène partiellement fluoré et de fluorure de vinylidène, des homopolymères de trichloréthylène, des copolymères de trichloréthylène et de fluorure de vinylidène, des mélanges de deux ou plus de deux de ces polymères ou des mélanges d'un ou plusieurs quelconques de ces polymères avec du PTFE ; et, sur au moins une partie d'au moins une surface dudit substrat, une couche de matière oxydable (22, 23, 33, 34), par exemple une couche d'un métal choisi dans le groupe consistant en lithium, sodium, magnésium, béryllium, calcium, strontium, baryum, aluminium, titane, zirconium et leurs alliages, la couche oxydable comportant au moins une portion qui est discontinue et le film polymérique et la matière oxydable étant capables conjointement de réagir ensemble de manière exothermique lors de l'inflammation.

7. Matière pyrotechnique en feuille suivant la revendication 6, comprenant du magnésium ou un de ses alliages appliqué sous forme d'un revêtement sur un substrat en fluoropolymère.

8. Matière pyrotechnique en feuille suivant la revendication 6 ou la revendication 7, comprenant un film d'un polymère halogéné (3) en une épaisseur de 50 μm portant une couche, déposée en phase vapeur sur chaque face, consistant en une couche de magnésium de 2 à 40 μm d'épaisseur.

9. Procédé de production d'une matière pyrotechnique en feuille (20, 30), dans lequel des protubérances intégrales (24, 31) sont formées sur au moins une portion de surface de la matière en feuille comprenant une couche servant de substrat constituée d'une matière oxydante (21, 32) recouverte par au moins une couche de matière oxydable (22, 23, 33, 34), le rapport de la matière oxydante et de la matière oxydable étant tel que la matière oxydante et la matière oxydable au niveau de ladite portion de surface soient conjointement capables de réagir ensemble de manière exothermique lors de l'inflammation, caractérisé en ce que des orifices perméables à la flamme (28, 37) sont formés dans au moins une desdites couches de matière oxydante et de matière oxydable sur au moins une portion de la surface desdites protubérances à travers laquelle des portions comportant des orifices de l'interface de couches (28, 38) sont exposées de telle sorte que lesdites portions d'interface puissent être enflammées par une flamme parcourant la portion de surface de la matière en feuille contenant lesdits orifices.

10. Procédé suivant la revendication 9, caractérisé en ce qu'une des couches de matière oxydante ou de matière oxydable comprend une matière déformable nécessitant une plus grande déformation pour la rupture que la matière de l'autre couche, et les orifices perméables à la flamme sont formés par étirage de la feuille pyrotechnique au niveau desdites protubérances afin de déformer de manière permanente la couche de matière (21, 32) ayant la plus forte déformation pour la rupture et de provoquer la rupture de la couche de matière (22, 23, 33, 34) ayant la plus faible déformation pour la rupture.

11. Procédé suivant la revendication 10, caractérisé en ce que des portions de la feuille pyrotechnique sont étirées dans une direction ayant une composante perpendiculaire au plan de base de la matière pyrotechnique en feuille pour produire des protubérances (24, 31) sur la feuille et pour provoquer simultanément la rupture d'au moins une des couches de matière oxydante ou de matière oxydable (22, 23, 33, 34) afin de produire des orifices perméables à la flamme (28, 37) à travers lesquels des portions de l'interface (29, 38) de la matière oxydante et de la matière oxydable sont exposées.

12. Procédé suivant la revendication 11, dans lequel les orifices perméables à la flamme (28, 37) sont présents sur des portions de surface des protubérances s'étendant dans une direction ayant une composante perpendiculaire au plan de base de la matière pyrotechnique en feuille (20, 30).

13. Procédé suivant la revendication 11 ou la revendication 12, dans lequel les protubérances (24, 31) sont formées au moyen d'un ou plusieurs éléments de poiçonnage ou d'estampage, par exemple des éléments de gaufrage munis d'un motif ou de rouleaux munis d'un motif.

14. Charge pyrotechnique comprenant une matière pyrotechnique en feuille suivant l'une quelconque des revendications 1 à 8 disposée en couches superposées, de telle sorte que les protubérances (24, 31) maintiennent un espace entre lesdites couches pour permettre à la flamme et aux produits de combustion de circuler entre les couches.

Fig.1.

Fig.2.

Fig.3.

Fig.4.

Fig.5.

11

Fig.6.

Fig.7.

Fig.8.

Fig.9.

Fig.10.

12

FIGURE 11.

FIGURE 12.

FIGURE 13.